# EUROPÄISCHE PATENTANMELDUNG

(11) **EP 0 982 122 A2**
(43) Veröffentlichungstag der Anmeldung: **01.03.2000**
(21) Anmeldenummer: 99114726.5
(22) Anmeldetag: 23.07.1999
(51) Int. Cl.: B32B 27/34, B32B 27/36

(54) **Mehrschichtverbund mit Barrierewirkung**

(30) Priorität: 26.08.1998 DE 19838709
(71) Anmelder: Degussa-Hüls Aktiengesellschaft, 60287 Frankfurt am Main (DE)
(72) Erfinder: Ries, Hans, Dr., 45772 Marl (DE); Schmitz, Guido, Dr., 48249 Dülmen (DE); Hauck, Hans-Peter Dr., 45657 Recklinghausen (DE)

(57) **Zusammenfassung**

Ein Mehrschichtverbund, der mindestens folgende Schichten enthält:
I. Eine Schicht aus einer Polyamid-Formmasse und
II. eine Schicht aus einer Polyalkylen-2,6-naphthalat-Formmasse, die ein Gemisch aus
   a) 80 bis 99 Gew.-% Polyalkylen-2,6-naphthalat und
   b) 1 bis 20 Gew-% einer oder mehrerer, mindestens zwei Isocyanatgruppen aufweisender Verbindungen enthält,
   weist ohne Verwendung einer zusätzlichen Haftvermittlerschicht eine feste und dauerhafte Verbundhaftung auf.

Der Verbund wird in erster Linie zum Transport (petro)chemischer Stoffe, als Leitung im Kraftfahrzeugsektor sowie als Hohlkörper verwendet.

## Beschreibung

Gegenstand der Erfindung ist ein Kunststoff-Mehrschichtverbund mit Barrierewirkung, beispielsweise ein Rohr, ein Hohlkörper oder eine Folie.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium und beständig gegen hohe und tiefe Temperaturen sowie mechanische Belastungen sein.

Einschichtige Rohre sind nicht immer in der Lage, die notwendigen Anforderungen zu erfüllen Beim Transport von z. B. aliphatischen oder aromatischen Lösemitteln, Kraftstoffen o. ä. zeigen sie erhebliche Nachteile wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen, die eine Sperrschicht enthalten. Gut geeignete Sperrschichtmaterialien sind beispielsweise Potyethylennaphthalate und Polybutylennaphthalate. Grundsätzlich ist aber bei Mehrschichtrohren die Haftung zwischen den Schichten wegen der Unverträglichkeit der meisten Kunststoffe problematisch Ein fester Verbund zwischen den einzelnen Polymerschichten ist bei technischen Anwendungen jedoch unbedingt erforderlich.

In der EP-A-0 637 509 und der DE-C-42 14 383 werden Mehrschichtrohre mit Barrierewirkung beschrieben, die eine Sperrschicht aus Polyethylennaphthalat bzw. Polybutylennaphthalat enthalten, welche durch einen Haftvermittler mit einer Polyamidschicht verbunden ist In beiden Fällen bereitet jedoch der Haftvermittler Probleme. Bei den in der DE-C-42 14 383 beschriebenen Verbunden ist der aus thermoplastischem Polyurethan bestehende Haftvermittler anfällig gegenüber methanolhaltigen Kraftstoffen, so daß nach längerem Kontakt die Schichtenhaftung verlorengeht; zudem ist die Viskosität der handelsüblichen thermoplastischen Polyurethane bei den für die Coextrusion mit einem Polyalkylennaphthalat erforderlichen Temperaturen so niedrig, daß eine einwandfreie Coextrusion aufgrund der hohen Viskositätsunterschiede extreme Schwierigkeiten bereitet. Außerdem ist die Gefahr der thermischen Zersetzung bereits bei geringen Verweilzeiten relativ groß. Die Haftvermittler, die in der EP-A-0 637 509 offenbart werden, verspröden bei längerem Kontakt mit methanolhaltigen Kraftstoffen bei höherer Temperatur, wobei die Schichtenhaftung ebenfalls verlorengeht.

Grundsätzlich haben Verbunde, die neben den reinen Funktionsschichten zusätzliche Haftvermittlerschichten erfordern, den Nachteil, daß infolge der Verwendung eines Haftvermittlers die Anzahl der zu extrudierenden Schichten steigt, was erhöhte Kosten für Beschaffung und Betrieb der Extrusionsanlage mit sich bringt. Hinzu kommen die mit steigender Schichtenzahl ebenfalls steigenden Kosten für die Qulitätssicherung am Mehrschichtverbund

Eine Verbesserung kann hier im Prinzip durch selbsthaftende Sperrschichten erzielt werden. So werden in der EP-A-0 569 681, der EP-A-0 569 683 und der EP-A-0 601 295 Mehrschichtverbunde mit einer Sperrschicht beschrieben, welche ein Gemisch darstellt aus einem teilkristallinen Polyester wie Polybutylenterephthalat und Verbindungen, die mindestens zwei Isocyanatgruppen aufweisen.

Die dort offenbarten haftvermittlerfreien Verbunde besitzen jedoch den Nachteil daß nach längerem Kontakt mit methanolhaltigen Kraftstoffen bei hoher Temperatur (z. B. Prüfung mit Testkraftstoff CM15 bei 60 °C nach Ford WSS-M98D33-A) die Haftung zwischen Polyamid und Polyester-Sperrschicht verlorengeht. Das gleiche Resultat findet man auch dann, wenn derartige Rohre als Kühlflüssigkeitsleirung verwendet werden.

Die Aufgabe der vorliegenden Erfindung war es, einen Mehrschichtverbund mit einer guten Sperrwirkung gegen das damit in Kontakt stehende Medium, wie Kraftstoffe, insbesondere auch methanolhaltige Kraftstoffe, dessen einzelne Komponenten, Kraftstoffdämpfe, Öle sowie gegen Kühlflüssickeit als auch deren einzelne Komponenten, üblicherweise Glykol und Wasser, zur Verfügung zu stellen, der keine zusätzlichen Haftvermittlerschichten enthält, wobei die einzelnen Schichten aber trotzdem einen festen Verbund bilden bei dem auch nach langer Lagerung in methanolhaltigen Kraftstoffen bei höherer Temperatur bzw. nach längerer Einwirkung von Kühlflüssigkeit unter Betriebsbedingungen die Schichtenhaftung erhalten bleibt.

Diese Aufgabe wird gelöst durch einen Mehrschichtverbund, der mindestens folgende Schichten enthält:
I. Eine Schicht I aus einer Polyamid-Formmasse und
II. eine Schicht II aus einer Polyalkylen-2,6-naphthalat-Formmasse, die ein Gemisch aus
   a) 80 bis 99 Gew.-% Polyalkylen-2,6-naphthalat und
   b) 1 bis 20 Gew.-% einer oder mehrerer, mindestens zwei Isocyanatgruppen aufweisender Verbindungen
      enthält, wobei das Polyalkylen-2,6-naphthalat ein Polyethylen-2'6-naphthalat oder ein Polybutylen-2,6-naphthalat ist und darüber hinaus die der Komponente II.b entstammenden Isocyanatgruppen in der Schicht II in einer Konzentration zwischen 0,03 und 3 Gew.-% enthalten sind,
   wobei die Schichten ohne Verwendung einer zusatzlichen Haftvermittlerschicht fest miteinander verbunden sind

Als Polyamide kommen in erster Linie aliphatische Homo- und Copolykondensate in Frage. Als Beispiel seien die 4.6-, 6.6-, 6.12- 8.10-, 10.10-Polyamide o. ä. genannt Bevorzugt werden 6-, 10.12-, 11-, 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α, ω-Aminocarbonsäure bzw. von dem davon abgeleiteten Lactam ausgegangen worden ist - H. Domininghaus, Die Kunststoffe und ihre Eigenschaften, Seite 272, VDI-Verlag (1976).]

Sofern Copolyamide verwendet werden, konnen diese z. B. Adipinsäure, Sebacinsäure, Korksäure, Isophthalsäure, Terephthalsaure als Cosäure bzw. Bis(4-aminocyclohexyl)-methan, Trimethylhexamethylendiamin, Hexamethylendiamin o. ä. als Codiamin enthalten.

Die Herstellung dieser Polyamide ist bekannt (z. B. D. B. Jacobs, J. Zimmermann, Polymerization Processes, S. 424-67; Interscience Publishers, New York (1977); DE-AS 21 52 194).

Ebenfalls geeignet als Polyamide sind gemischte aliphatisch/aromatische Polykondensate, wie sie z. B. in den US-PSS 2 071 250, 2 071 251, 2 130 523. 2 130 948, 2 241 322, 2 312 966, 2 512 606, 3 393 210 bzw. in Kirk-Othmer, Encyclopedia of Chemical Technology, 3. Aufl., Vol. 18, Seiten 328 und 435, Wiley & Sons (1982) beschrieben werden. Als Polyamide geeignete Polykondensate sind gleichfalls Poly(etheresteramide) bzw. Poly(etheramide) Derartige Produkte werden z. B. in den DE-OSS 27 12 987, 25 23 991 und 30 06 961 beschrieben.

Das Molekulargewicht (Zahlenmittel) der Polyamide liest oberhalb von 5 300, vorzugsweise oberhalb von 10 000 - entsprechend einer relativen Viskosität (ηᵣₑₗ) im Bereich von 1,5 bis 2,8.

In einer bevorzugten Ausführungsform werden solche Polyamide für die Schicht I verwendet, bei denen mindestens 30 % aller Endgruppen Aminogruppen darstellen.

Die genannten Polyamide werden für sich oder in Gemischen eingesetzt.

Sofern erforderlich, können die Polyamide und/oder das Polyalkylen-2,6-naphthalat schlagzah eingestellt werden. Hierzu geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien als schlagzähmachende Kautschuke genannt: Kern/Schale-Kautschuke mit einem zahelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Die Schicht II enthält vorzugsweise ein Gemisch aus 85 bis 99 Gew -%. noch besser 90 bis 98 Gew.-% Polyalkylen-2,6-naphthalat und 1 bis 15 Gew.-%, noch besser 2 bis 10 Gew.-% einer oder mehrerer, mindestens zwei Isocyanatgruppen aufweisenden Verbindungen.

In einer besonders bevorzugten Ausführungsform enthält die Schicht II ein Gemisch aus
a) 99 bis 95 Gew.-% Polyalkylen-2,6-naphthalat und
b) 1 bis 5 Gew.-% eines Gemisches aus
   1) 30 bis 70 Gew.-% mindestens einer zwei Isocyanatgruppen aufweisenden Verbindung und
   2) 30 bis 70 Gew.-% mindestens einer mehr als zwei Isocyanatgruppen aufweisenden Verbindung,
   wobei die Isocyanatgruppen in der Schicht II in einer Konzentration zwischen 0.03 und 0,3 Gew.-% enthalten sind.

Noch besser ist die Komponente gemäß a) zu 98 bis 96 Gew.-% und die Komponente gemäß b) zu 2 bis 4 Gew.-% enthalten.

Die Komponente gemäß b) besteht vorzugsweise aus einem Gemisch von 40 bis 60 Gew.-% mindestens einer zwei Isocyanatgruppen aufweisenden Verbindung und 40 bis 60 Gew.-% mindestens einer mehr als zwei Isocyanatgruppen aufweisenden Verbindung.

Die Isocyanatgruppen sind in der Schicht II vorzugsweise in einer Konzentration zwischen 0,06 und 0,25 Gew. -% vorhanden.

Als zwei Isocyanatgruppen aufweisende Verbindung eignen sich insbesondere aromatische und (cyclo-)aliphatische Isocyanate wie beispielsweise 1,4-Phenylendiisocyanat, 2,4- Toluylendiisocyanat, 2,6-Toluylendiisocyanat, 1,5-Naphthylendiisocyanat, 1,6-Hexamethylendiisocyanat, Diphenylmethan-2,4'-diisocyanat, Diphenylmethan-4,4'-diisocyanat, Diphenylmethan-2,2'-diisocyanat, Isophorondiisocyanat, 1,4-Tetramethylendiisocyanat, 1,12-Dodecandiisocyanat. Weitere Beispiele sind Cyclohexan-1,3-diisocyanat, Cyclohexan-1,4-diisocyanat, Cyclobutan-1,3-diisocyanat, 2,4-Hexahydrotoluylendiisocyanat, 2,6-Hexahydrotoluylendiisocyanat, Hexahydro-1,3-phenylendiisocyanat. Norbornandiisocyanat, p- oder m-Xylylendiisocyanate, Perhydro-2,4'-diphenylmethandiisocyanat und Perhydro-4,4'-diphenylmethandiisocyanat.

In der Schicht II haben sich als zwei Isocyanatgruppen enthaltende Verbindung besonders vorteilhaft Isophorondiisocyanat sowie Umsetzungsprodukte davon mit sich selbst sowie mit geeigneten Realctanten, wie z. B. α, ω-Diole mit 2 - 10 C-Atomen in der Kohlenstoffkette erwiesen.

Bevorzugte Umsetzungsprodukte ergeben sich beispielsweise aus der Reaktion mindestens zweier Moleküle Isophorondiisocyanat, wobei die Anbindung durch Reaktion von jeweils zwei Isocyanatgruppen unter Ausbildung einer Biuretgruppe erfolgt.

Weitere vorteilhafte Umsetzungsprodukte werden beispielsweise durch Umsetzung von jeweils zwei Isophorondiisocyanat-Molekülen mit einem Molekül Diol erhalten, wobei jeweils eine Isocyanatgruppe des Isophorondiisocyanats mit einer der Hydroxylgruppen des Diols eine Urethanbindung ausbildet. Beispiele für besonders gut geeignete Diole sind Butandiol und Diethylenglykol.

Als mehr als zwei Isocyanatgruppen außweisende Verbindung werden Verbindungen eingesetzt, die bevorzugt genau drei Isocyanatgruppen enthalten. Als solche eignen sich beispielsweise Triphenylmethan-4,4',4''-triisocyanat, weiterhin Umsetzungsprodukte aus den weiter oben aufgeführten Diisocyanaten, insbesondere Triisocyanurate dieser Diisocyanate, wie beispielsweise das Triisocyanurat, das aus der Umsetzung von jeweils drei Molekülen Hexamethylendiisocyanat entsteht. Besonders bevorzugt ist das Triisocyanurat, das durch Umsetzung von jeweils drei Molekülen Isophorondiisocyanat entsteht.

Die Isocyanatgruppen können blockiert vorliegen. Die Blockierung von Isocyanatgruppen ist bekannt (z. B. Paint Resin 58 (1988) 5, 18-19). Beispielsweise sei eine Blockierung durch Umsetzung der Isocyanatgruppen mit Diolen, Pyrazolen, Oximen, insbesondere Ketoximen, sowie Lactamen, insbesondere Caprolactam, angeführt.

Den Formmassen für die Schichten 1 sowie II können übliche Hilfs- und Zusatzstoffe wie z. B. Flammschutzmittel, Stabilisatoren, Weichmacher, Verarbeitungshilfsmittel, Viskositätsverbesserer, Füllstoffe, insbesondere solche zur Verbesserung der Leitfähigkeit, Pigmente o. ä. zugefügt werden. Insbesondere ist es vorteilhaft, die mit einem entzündbaren Medium in Kontakt stehende Schicht durch Zusatz von Ruß, Kohlefaser, Graphitfibrillen, Metallfasern, Metallpulver oder ähnlichem elektrisch leitfähig einzustellen, so daß der Oberflächenwiderstand kleiner als 10⁹ Ωcm ist. Die Menge der genannten Mittel ist so zu dosieren, daß die gewünschten Eigenschaften nicht ernsthaft beeinflußt werden.

Die Herstellung der Formmasse für die Schicht II erfolgt nach üblichen und bekannten Verfahren durch Schmelzemischen der Komponenten gemäß II. a) und II. b) in einem gut knetenden Mischaggregat, wie z. B. einem Doppelschneckenkneter, bei Temperaturen, die sich nach den Schmelzpunkten der Komponenten II. a) und II. b) richten, im allgemeinen bei Temperaturen zwischen 200 und 300 °C.

Bei der Herstellung der Formmasse für die Schicht II können die bei der Verarbeitung von Isocyanaten üblichen und bekannten Katalysatoren eingesetzt werden.

Die Formmasse für die Schicht II sollte vor der Herstellung der mehrschichtigen Rohre trocken und unter Ausschluß von Luftfeuchtigkeit gelagert werden.

Die oben beschriebene Herstellung der Formmasse für die Schicht II kann auch direkt in einem Speiseextruder der zur Herstellung der Mehrschichtverbunde verwendeten Coextrusionsanlage oder Spritzzußanlage erfolgen, so daß die Formmasse für die Schicht II direkt im Anschluß an ihre Herstellung - ohne weitere Zwischenlagerung - zu einer Schicht des Mehrschichtverbundes verarbeitet werden kann. Im Falle der Coextrusion sind die Verarbeitungsbedingungen bei der Herstellung der Mehrschichtverbunde so zu wählen, daß die Schmelzen mit ausreichend hohem Druck aufeinander gelegt werden.

Die Fertigung von mehrschichtigen Rohren erfolgt in bekannter Weise durch Coextrusion.

Die erfindungsgemäßen Mehrschichtverbunde weisen in hervorragendem Maße eine gute Beständigkeit sowie gute Sperrwirkung gegen Diffusion gegenüber (petro)chemischen Stoffen, Lösemitteln und Kraftstoffen auf. Ferner sind die beiden Schichten auch bei höherer Betriebstemperatur dauerhaft fest miteinander verbunden, so daß z. B. bei thermischer Ausdehnung oder Biegen eines Rohres kein Abscheren der verschiedenen Schichten voneinander auftritt. Darüber hinaus ist es auch möglich, neben einem 2-Schichtverbund andere Verbundtypen herzustellen, die z. B aus 3 oder mehr Schichten bestehen, indem weitere Schichten I bzw. II zusätzlich eingearbeitet werden.

In einer bevorzugten Ausführungsform haben die Mehrschichtverbunde einen dreischichtigen Aufbau: Schicht I/ Schicht II/ Schicht I.

Zusätzlich können auch noch andere Schichten enthalten sein, z. B eine sich bei einem Rohr außen an die Schicht I anschließende Kautschukschicht.

Bei einem dreischichtigen Rohr mit einem Außendurchmesser von 8 mm une einer Gesamtwandstärke von 1 mm konnen die Schichtdicken beispielsweise von innen nach außen 0,2 mm, 0,2 mm, 0,6 mm betragen. Erfindungsgemäß sind auch andere Schichtdickenverteilungen denkbar, beispielsweise mit einer dickeren Mittelschicht von z. B. 0,4 mm.

Bevorzugt eingesetzt werden die erfindungsgemäßen Mehrschichtverbunde zum Transport (petro)chemischer Stoffe, beispielsweise für Tankstellenversorgungsleitungen, bzw. im Kraftfahrzeugsektor zum Durchleiten von Brems-, Kühl- und Hydraulikflüssigkeiten sowie Kraftstoff. Eine weitere Verwendung besteht darin, daß aus ihnen Hohlkörper wie Kraftstoffbehälter oder Einfüllstutzen, insbesondere für den Kraftfahrzeugsektor, hergestellt werden. Die Rohre können hierbei in gerader oder auch in gewellter Form verwendet werden. Besonders vorteilhaft sind sie nur im Krümmungsbereich gewellt.

Ein weiterer Einsatzbereich der erfindungsgemäßen Mehrschichtverbunde sind Folien, beispielsweise Verpackungsfolien, bei denen eine geringe Gasdurchlässigkeit gefordert wird

Die in den Beispielen aufgeführten Ergebnisse wurden mit Hilfe nachstehender Meßverfahren bestimmt.

Die Bestimmung der Lösungsviskosität (rel. Viskosität ηᵣₑₗ) der Polyamide erfolgte unter Verwendung einer 0,5 gew.-%igen m-Kresol-Lösung bei 25 °C gemäß DIN 53 727/ISO 307.

Zur Bestimmung der Aminoendgruppen wurde 1 g der Polyamide in 50 ml m-Kresol bei 25 °C gelöst. Die Lösung wurde mit Perchlorsäure potentiometrisch titriert.

Zur Bestimmung der Carboxylendgruppen im Polyamid wurde 1 g Polykondensat in 50 ml Benzylalkohol unter Stickstoffabdeckung bei 165 °C gelöst. Die Lösezeit betrug maximal 20 min. Die Losung wurde mit einer Lösung von KOH in Ethylenglykol (0,05 mol KOH/l) gegen Phenolphthalein bis zum Farbumschlag titriert.

Die Bestimmung der Lösungsviskosität (Viskositätszahl J) der Polyester erfolgte in einer 0,5 gew.-%igen Phenol/o-Dichlorbenzol-Lösung (Gewichtsverhältnis 1 : 1) bei 25 °C gemäß DIN 53 728/ ISO 1628/5 - Teil 5.

Fur die Bestimmung der Isocyanatgruppen wurden 6 g der Komponente II. (Polyester, Isocyanat) bei 180 °C in einem Gemisch aus Dichlorbenzol/Dibutylamin (80 : 20 Vol.-%) gelöst. Die Lösung wurde bei 20 °C mit 10%iger Salzsäure gegen Bromphenol als Indikator titriert (DIN 53 185).

Die Prüfling der Haftung von zwei Schichten aneinander erfolgte mittels Haftungstest in Anlehnung an ISO 8033 (1991-12-01).

Die Bestimmung der Diffusion von Kraftstoffanteilen erfolgte an Rohren mit einem Kraftstoffgemisch (Kraftstoff CM15: 42,5 Vol.-Tle. Isooctan, 42,5 Vol.-Tle. Toluol und 15 Vol-Tle. Methanol) bei 23 °C und 50 % Luftfeuchtigkeit. Die Proben mit der Länge von 200 mm wurden mit dem Kraftstoffgemisch gefüllt und waren während der Messung mit einem gefüllten Vorratsbehältnis verbunden. Die Diffusion wurde als Masseverlust durch Diffusion über die Zeit (Messung alle 24 h) ermittelt. Als Maß wurde der pro Fläche registrierte Masseverlust angegeben, der gemessen wird, wenn sich der Diffusionsprozeß im Gleichgewicht befindet, d. h., wenn sich der pro 24 h ermittelte Masseverlust mit der Zeit nicht mehr ändert.

Mit Buchstaben gekennzeichnete Beispiele sind nicht erfindungsgemäß.-

### Beispiele

Verwendete Polyamide der Schicht I:
- PA 1:: Polyamid 12 (ηᵣₑₗ : 2,05; 30% der Endgruppen sind Aminogruppen)
- PA 2:: Polyamid 12 (ηᵣₑₗ : 2,05; 86 % der Endgruppen sind Aminogruppen)

Verwendete Polyesterformmassen der Schicht II:
- Z 1:: Homopolybutylen-2,6-naphthalat (J-Wert: 140 cm³/g; TEIJIN Ltd., Japaz)
- Z 2:: Mischung aus 95 Gew.-% Homopolybutylenterephthalat (J-Wert. 115 cm³/g, VESTODUR 1000, Creanova Spezialchemie GmbH, D-45764 Marl, Deutschland) und 5 Gew.-% einer Mischung, bestehend aus:
a. 50 Gew.-% eines Uretdions, aufgebaut aus jeweils zwei Molekülen Isophorondiisocyanat, wobei die verbleibenden NCO-Gruppen mit Caprotactam blockiert sind, und
b. 50 Gew.-% Isocyanurat des Isophorondiisocyanats (VESTANAT® T1890, Creanova Spezialchemie GmbH, D-45764 Marl, Deutschland)
- Z 3:: Mischung aus 95 Gew.-% Z 1 und 5 Gew.-% der gleichen Mischung wie in Z 2.

Aus den vorgenannten Formmassen wurden dreischichtige Rohre mit Außendurchmesser 8 mm und Wanddicke 1 mm hergestellt. Die Dicken der drei Einzelschichten betrugen 0,4/0,2/0,4 mm Die Rohre wurden auf einer Laborextrusionsanlage mit Hilfe eines 5-Schicht-Rohrwerkzeuges hergestellt, wobei zwei Kanäle des Werkzeuges verschlossen wurden. Die Massetemperaturen bei der Verarbeitung lagen für die Polyamide PA 1 und PA 2 bei 230 °C, für die Formmasse Z 2 bei 250 °C und für die Formmassen Z 1 und Z 3 bei 270 °C.

Die Rohre wurden in einer Prüfvorrichtung gemäß SAE J 1737 mit methanolhahigem Kraftstoff CM15 bei 60 °C für 1000 Stunden von innen mit Kraftstoff beaufschlagt Hierbei wurde die Permeationsrate nach SAE J 1737 bestimmt. Anschließend wurden die so vorkonditionierten Rohre entnommen und für 4 Stunden im Vakuumschrank bei 60 °C getrocknet. Hiernach wurden von den Rohren Proben gemäß ISO 8033, Typ 4 angefertigt und die Haftung sowohl zwischen Außen- und Zwischenschicht als auch zwischen Innen- und Zwischenschicht bestimmt.

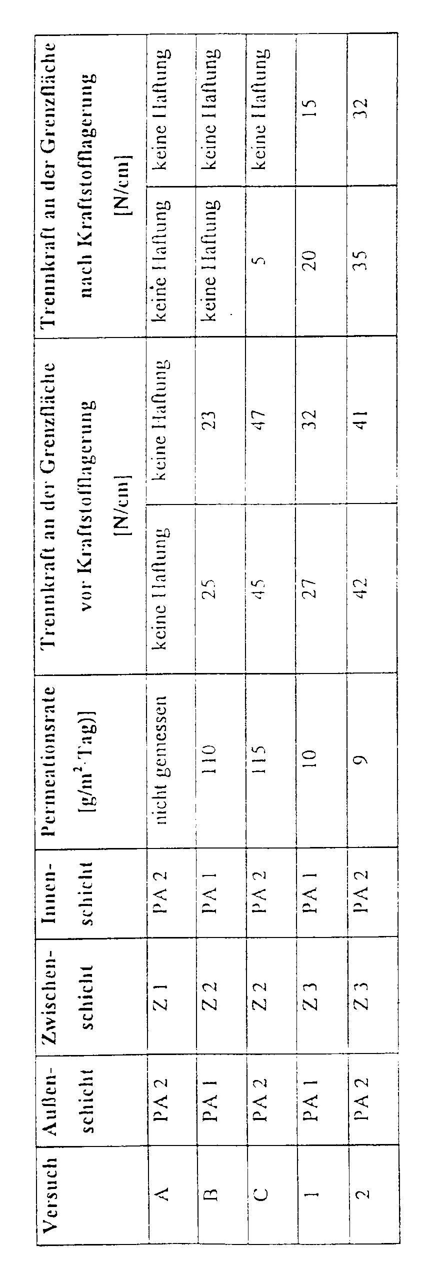

## Patentansprüche

1. Mehrschichtverbund, der mindestens folgende Schichten enthält:
I. Eine Schicht I aus einer Polyamid-Formmasse und
II. eine Schicht II aus einer Polyester-Formmasse,
wobei die Schichten ohne Verwendung einer zusätzlichen Haftvermittlerschicht fest miteinander verbunden sind,
dadurch gekennzeichnet,
daß die Polyester-Formmasse ein Gemisch aus
a) 80 bis 99 Gew.-% eines Polyalkylen-2,6-naphthalats, ausgewählt aus Polyethylen-2,6-naphthalat und Polybutylen-2,6-nauhthalat sowie
b) 1 bis 20 Gew.-% einer oder mehrerer, mindestens zwei Isocyanatgruppen aufweisender Verbindungen
enthält, wobei darüber hinaus die der Komponente II.b entstammenden Isocyanatgruppen in der Schicht II in einer Konzentration zwischen 0,03 und 3 Gew.-% enthalten sind

2. Mehrschichtverbund gemäß Anspruch 1,
dadurch gekennzeichnet,
daß bei dem Polyamid der Schicht 1 mindestens 30 % aller Endgruppen Aminogruppen sind.

3. Mehrschichtverbund gemäß einem der vorhergehenden Ansprüche,
dadurch gekennzeichnet,
daß die Schicht II ein Gemisch aus
a) 99 bis 95 Gew.-% Polyalkylen-2,6-naphthalat und
b) 1 bis 5 Gew.-% eines Gemisches aus
1) 30 bis 70 Gew.-% mindestens einer zwei Isocyanatgruppen aufweisenden Verbindung und
2) 30 bis 70 Gew.-% mindestens einer mehr als zwei Isocyanatgruppen aufweisenden Verbindung enthält,
wobei die Isocyanatgruppen in der Schicht II in einer Konzentration zwischen 0,03 und 0,3 Gew.-% enthalten sind.

4. Mehrschichtverbund gemäß einem der vorhergehenden Ansprüche,
dadurch gekennzeichnet,
daß in der Schicht II als zwei Isocyanatgruppen aufweisende Verbindung Isophorondiisocyanat oder eine daraus durch Umsetzung mit sich selbst oder mit α, ω-Diolen mit 2 - 10 C-Atomen abgeleitete Verbindung eingesetzt wird.

5. Mehrschichtverbund gemäß einem der Ansprüche 3 oder 4,
dadurch gekennzeichnet,
daß die mehr als zwei Isocyanatgruppen aufweisende Verbindung ein aus Isophorondiisocyanat abgeleitetes Triisocyanurat ist.

6. Mehrschichtverbund gemäß einem der vorhergehenden Ansprüche,
dadurch gekennzeichnet,
daß die Schicht II ein durch ein Lactam blockiertes Isocyanat enthält.

7. Mehrschichtverbund gemäß einem der vorhergehenden Ansprüche,
dadurch gekennzeichnet,
daß er die Schichtenfolge I/II/I enthält.

8. Mehrschichtverbund gemäß einem der vorhergehenden Ansprüche,
dadurch gekennzeichnet,
daß eine Schicht elektrisch leitfähig eingestellt ist mit einem Oberflächenwiderstand von kleiner als 10⁹ Ωcm.

9. Mehrschichtverbund gemäß einem der vorhergehenden Ansprüche,
dadurch gekennzeichnet,
daß er zusätzlich eine sich an die Schicht I anschließende Kautschukschicht enthält.

10. Mehrschichtverbund gemäß einem der vorhergehenden Ansprüche,
dadurch gekennzeichnet,
daß er ein Rohr oder ein Hohlkörper ist.

11. Verwendung des Mehrschichtverbundes gemäß einem der Ansprüche 1 bis 10 für den Transport (petro)chemischer Stoffe.

12. Verwendung des Mehrschichtverbundes gemäß einem der Ansprüche 1 bis 10 im Kraftfahrzeugsektor als Bremsflüssigkeitsieitung, Kuhlflüssigkeitsleitung, Hydraulikflüssigkeitsleitung oder Kraftstoffleitung.

13. Verwendung des Mehrschichtverbundes gemäß einem der Ansprüche 1 bis 10 als Kraftstoffbehälter oder Einfüllstutzen.
